# EUROPÄISCHE PATENTSCHRIFT

(11) **EP 0 864 775 B1**
(45) Veröffentlichungstag und Bekanntmachung des Hinweises auf die Patenterteilung: **02.10.2002**
(21) Anmeldenummer: 98890065.0
(22) Anmeldetag: 10.03.1998
(51) Int. Cl.: F16G 3/02

(54) **Textiler Gurt**
Textile belt
Courroie textile

(30) Priorität: 11.03.1997 AT 41997
(43) Veröffentlichungstag der Anmeldung: 16.09.1998
(73) Patentinhaber: HUYCK-AUSTRIA GESELLSCHAFT M.B.H., A-2640 Gloggnitz (AT)
(72) Erfinder: Eckhardt, Gerhard, 2641 Schottwien (AT)
(74) Vertreter: Matschnig, Franz, Dipl.-Ing.

(56) Entgegenhaltungen:
- EP-A- 0 564 436
- DE-A- 19 710 850
- GB-A- 115 569

## Beschreibung

Die Erfindung bezieht sich auf einen textilen Gurt, wie Siebband, Fördergurt od. dgl., bei welchem an den Stirnkanten der Gurtenden Schraubenwendeln befestigt sind, die ineinanderschiebbar und mittels eines einschiebbaren Steckdrahtes, -stiftes od. dgl. zusammenhängbar sind.

Gurte dieser Art werden insbesondere in der Entwässerungstechnik verwendet, beispielsweise für Schlammentwässerung, für Zellstoffentwässerung oder bei Papiermaschinen. Die üblichen Breiten derartiger Gurte liegen zwischen 1,5 und ca. 8 m.

Ein Gurt der gegenständlichen Art ist beispielsweise in der EP 0 564 436 A1 der Anmelderin beschrieben, wobei in diesem Dokument noch weitere Literatur genannt ist.

Die Verwendung von Schraubenwendeln an den Stirnkanten des Gurtes hat sich besonders vorteilhaft gezeigt, da die an gegenüberliegenden Stirnkanten des Gurtes befestigten Schraubenwendeln leicht ineinandergesteckt und mittels eines Steckdrahtes verbunden werden können. Andere Verbindungsmethoden, z.B. aus dem Gurtgewebe vorstehende, parallel nebeneinanderliegende Schlaufen zusammen mit einem Steckdraht sind in der Handhabung bei weitem nicht so einfach wie Schraubenwendeln. Allerdings hat sich in der Praxis gezeigt, daß es schon bei Beschädigung einer Schraubenwendel leicht dazu kommen kann, daß diese Wendel weiterreißt bzw. sich aus dem Verband mit dem Gurt löst. Die in diesem Fall erforderlichen Reparaturarbeiten sind äußerst zeitraubend und bedingen einen Ausfall der entsprechenden Maschine, auf welcher der Gurt, z.B. ein Siebband, verwendet wird.

Aufgabe der Erfindung ist es, diesen Nachteil zu mindern und einen Gurt zu schaffen, der eine höhere Lebensdauer bzw. Standzeit zwischen einem Auswechseln bzw. Reparaturen aufweist.

Diese Aufgabe wird erfindungsgemäß dadurch gelöst, daß die Schraubenwendel an jeder Stirnkante in mindestens drei Abschnitte, nämlich zwei schmale Randabschnitte und einen Mittelabschnitt unterteilt ist, wobei jeder Abschnitt unabhängig von den anderen Abschnitten mit dem Gurt verbunden ist.

Der Erfindung liegt die Einsicht zugrunde, daß Beschädigungen der Schraubenwendeln des Gurtes in erster Linie in den Randbereichen auftreten, in welchen der Gurt z.B. mit Anschlägen, Breitentastern, etc. zusammenwirkt. Die erfindungsgemäße Lösung führt dazu, daß in den meisten Fällen einer Beschädigung der breite Mittelabschnitt, der von den schmalen Randabschnitten unabhängig ist, unbeschädigt bleibt, sodaß auch meist der Gurt weiterlaufen kann, ohne daß seine Verbindung an Stirnkanten in Frage gestellt ist. In besonderen Fällen kann der schadhafte Randabschnitt durch Beschneiden des Gurtes entfernt werden, wobei der Gurt dann noch immer weiterlaufen kann, da die Breite des Randabschnittes meist nur in der Größenordnung von 1 % oder weniger der gesamten Gurtbreite liegt. Es ist vorteilhaft, wenn der Mittelabschnitt der Schraubenwendel über seine gesamte Breite in das Textilmaterial bzw. in Endschlaufen des Textilmaterials des Gurtes eingelegt ist, da hiedurch auch bei Beschädigung eines schmalen Randabschnittes der Mittelabschnitt mit Sicherheit intakt bleibt.

Die Sicherheit der Verbindung wird weiter erhöht, wenn die beiden Enden der Schraubenwendel des Mittelabschnittes einstückig in einen bindungskonform in Längsrichtung in das Textilmaterial des Gurtes zurückgespleißten Sicherungsabschnitt übergehen.

In manchen Fällen kann es zur Erhöhung der Sicherheit zweckmäßig sein, wenn der Mittelabschnitt 3 der Schraubenwendel 4 in Teilabschnitte unterteilt ist, wobei jeder Teilabschnitt unabhängig von den anderen Abschnitten mit dem Gurt verbunden ist.

Aus dem gleichen Grund empfiehlt es sich, wenn die inneren Enden der Schraubenwendeln der beiden Randabschnitte einstückig in einen bindungskonform in Längsrichtung in das Textilmaterial zurückgespleißten Sicherungsabschnitt übergehen.

In den äußeren Randbereichen des Gurtes kann die Sicherheit der Verbindung dadurch erhöht werden, daß die äußeren Enden der Schraubenwendeln der beiden Randabschnitte einstückig in einen in Querrichtung im Stirnkantenbereich zurückgenähten Sicherungsabschnitt übergehen.

Falls das Material der Schraubenwendeln und/oder des Gurtes thermoplastisch ist, können die Sicherungsabschnitte zumindest im Bereich der Stirnkanten des Gurtes thermofixiert sein, wodurch ein Lösen dieser Sicherungsabschnitte aus dem Verbund mit dem Gurtmaterial praktisch ausgeschlossen wird.

Ein weiterer Schutz der Verbindung der Gurtstirnkanten ergibt sich, wenn der Gurt in den schmalen Randabschnitten ein- oder beidseitig mit einem Schutzbelag versehen ist, wobei dieser Schutzbelag als Thermoplast oder als 2-Komponenten-Polymer auf den Gurt aufgebracht sein kann.

Die Breite der schmalen Randabschnitte wird zweckmäßigerweise zwischen 10 und 30 mm gewählt, da sich hierdurch mit geringem Herstellungsaufwand eine genügend große Sicherheit ergibt.

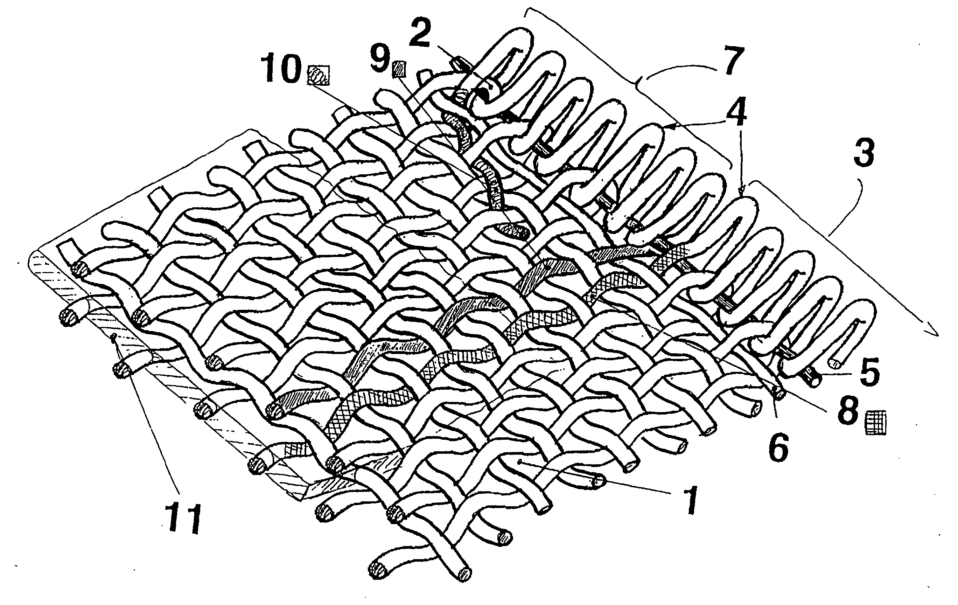

Die Erfindung samt weiterer Vorteile ist im folgenden anhand einer beispielsweisen Ausführungsform näher erläutert, die in der Zeichnung veranschaulicht ist. Diese Zeichnung zeigt eine Drauf- bzw. Unteransicht auf einen Teil eines erfindungsgemäßen Gurtes, in dessen Stirnkanten und Seitenbereich, mit teilweise entfernter Schraubenwendel.

In der Zeichnung ist ein Ausschnitt aus einem gewebten Gurt 1, z.B. einem Entwässerungssieb, gezeigt, der hier aus monofilem Kunststoffmaterial besteht. Die tatsächliche Breite eines solchen Gurtes beträgt beispielsweise zwischen 1,5 m und 10 m, und seine Länge kann ein Vielfaches dieser Breite aufweisen. In der Zeichnung ist der Ausschnitt aus dem Gurt in etwas vergrößertem Maßstab dargestellt, sodaß lediglich ein Teil der Stirnkante, in der Zeichnung oben, sowie ein Teil der Seitenkante, in der Zeichnung links, ersichtlich ist.

In die an der Stirnkante aus dem Gewebe des Gurtes 1 vorstehenden Schlingen 2 ist in Querrichtung ein Mittelabschnitt 3 einer Schraubenwendel 4 eingewebt und in diesem Fall mit einem besonderen Schußfaden 5 gehalten. Überdies ist ein Formfaden 6 eingewebt.

In der Zeichnung links schließt an diesen Mittelabschnitt 3 ein schmaler Seitenabschnitt 7 der Schraubenwendel 4 an, der ebenfalls in die vorstehenden Schlingen eingewebt ist.

An der hier nicht gezeigten anderen Stirnseite des Gurtes 1 ist in analoger Weise eine Schraubenwendel angebracht, sodaß das Gewebe zu einem endlosen Gurt dadurch verbunden werden kann, daß man die Schraubenwendeln an den Stirnseiten, Windung neben Windung ineinanderschiebt und sodann durch beide Schraubenwendeln, nämlich durch den sich ergebenden Kanal, einen Steckdraht, z.B. aus flachem Kunststoffmaterial, durchsteckt. Dies ist in der eingangs genannten EP 0 564 436 A1 der Anmelderin ebenso beschrieben, wie in einigen der in dieser Patentschrift genannten Dokumente.

Im allgemeinen wird ein dem schmalen Seitenabschnitt 7 entsprechender Seitenabschnitt auch an der anderen Seitenkante des Gurtes 1 vorgesehen sein, doch ist ein solcher Seitenabschnitt aus Platzgründen in der Zeichnung nicht gezeigt. Die beiden Enden des Mittelabschnittes 3 der Schraubenwendel 4 sind einstückig in einen bindungskonform in Längsrichtung in das Textilmaterial des Gurtes 1 zurückgespleißten Sicherungsabschnitt 8 fortgesetzt, wobei wegen der Breite des Gurtes hier nur der linke Sicherungsabschnitt 8 des Mittelabschnitts 3 gezeigt ist.

Sinngemäß gleiches gilt für die inneren Enden der beiden Randabschnitte 7 der Schraubenwendel, wobei aus den genannten Gründen hier nur der schmale linke Seitenabschnitt 7 betrachtet wird, bei dem das rechte Ende einstückig in einen Sicherungsabschnitt 9 übergeht, der bindungskonform in Längsrichtung in das Textilmaterial zurückgespleißt, das heißt zurückgewebt ist.

Das in der Zeichnung linke Ende des schmalen Seitenabschnittes 7 der Schraubenwendel ist in dem vorliegenden Ausführungsbeispiel einstückig in einen Sicherungsabschnitt 10 fortgesetzt, der im Stirnkantenbereich in das Gewebematerial zurückgenäht ist.

Es ist ersichtlich, daß dank der Erfindung der schmale Seitenabschnitt 7 der Schraubenwendel 4 beschädigt werden kann, ohne daß hiedurch der den Großteil der Breite einnehmende Mittelabschnitt 3 der Schraubenwendel 4 in Mitleidenschaft gezogen wird, was sich durch die völlige Unabhängigkeit dieser Abschnitte ergibt. Eine Beschädigung des Gurtes 1, hier der Schraubenwendel 4, die zu seinem Zusammenhalt dient, erfolgt in den meisten Fällen im Randbereich des Gurtes 1, da dieser während seines Umlaufs oft an seitliche Begrenzungen, zum Teil auch an Breitentaster, welche zu Regelungszwecken eingesetzt werden, anstößt. Sollte sich der Seitenabschnitt 7 der Schraubenwendel 4 lösen, so führt dies nicht zu einem Öffnen der Gurtverbindung an seinen beiden Stirnkanten, da der größte Teil, z.B. 98 % der Breite des Gurtes, noch immer durch den Mittelabschnitt 3 der Schraubenwendeln zusammengehalten ist. Im Bedarfsfall kann der Gurt 1 um die Breite des beschädigten, schmalen Seitenabschnittes 7 sogar beschnitten werden, doch hängt dies von der jeweiligen Verwendung des Gurtes 1 ab.

An den Seiten 7 kann der Gurt im Bereich der schmalen Randabschnitte einen Schutzbelag 11 aufweisen, der im allgemeinen beidseitig, z.B. thermoplastisch, auf die Textilbahn des Gurtes 1 aufgebracht wird. In Hinblick auf die erwähnte besondere Beanspruchung in den Randbereichen führt die Verwendung eines solchen Schutzbelages zu einer besonderen Erhöhung der Gurtlebensdauer bei Standzeit. Für die Erfindung ist die Art des Gurtmaterials, z.B. die Gewebebindung ebenso belanglos, wie die Art und Weise, in welcher die Schraubenwendel 4 mit der Stirnkante des Gurtes 1 verbunden wird. Es sei jedoch an Beispielen erwähnt, daß als Materialien für den Gurt Polyamid, Polyester, Polypropylen und Polyvinylidenfluorid verwendet werden und als Gewebebindungen, soferne ein Gewebe vorliegt, Leinwand 1/1, Köper in allen Varianten, Panama und Atlas in Frage kommen, wobei alle Bindungen auch mehrlagig möglich sind.

## Patentansprüche

1. Textiler Gurt (1), wie Siebband, Fördergurt od. dgl., bei welchem an den Stirnkanten der Gurtenden Schraubenwendeln (4) befestigt sind, die ineinanderschiebbar und mittels eines einschiebbaren Steckdrahtes, -stiftes od. dgl. zusammenhängbar sind,
**dadurch gekennzeichnet, daß**
die Schraubenwendel (4) an jeder Stirnkante in mindestens drei Abschnitte, nämlich zwei schmale Randabschnitte (7) und einen Mittelabschnitt (3) unterteilt ist, wobei jeder Abschnitt unabhängig von den anderen Abschnitten mit dem Gurt verbunden ist.

2. Gurt nach Anspruch 1, **dadurch gekennzeichnet, daß** der Mittelabschnitt (3) der Schraubenwendel (4) über seine gesamte Breite in das Textilmaterial eingewebt bzw. in Endschlaufen des Textilmaterials des Gurtes (1) eingelegt ist.

3. Gurt nach Anspruch 1, **dadurch gekennzeichnet, daß** der Mittelabschnitt (3) der Schraubenwendel (4) in Teilabschnitte unterteilt ist, wobei jeder Teilabschnitt unabhängig von den anderen Abschnitten mit dem Gurt verbunden ist.

4. Gurt nach einem der Ansprüche 1 bis 3, **dadurch gekennzeichnet, daß** die beiden Enden des Mittelabschnittes (3) der Schraubenwendel (4) bzw. seiner Teilabschnitte einstückig in einen bindungskonform in Längsrichtung in das Textilmaterial des Gurtes (1) zurückgespleißten Sicherungsabschnitt (8) übergehen.

5. Gurt nach einem der Ansprüche 1 bis 4, **dadurch gekennzeichnet, daß** die inneren Enden der beiden Randabschnitte (7) der Schraubenwendel einstückig in einen bindungskonform in Längsrichtung in das Textilmaterial zurückgespleißten Sicherungsabschnitt (9) übergehen.

6. Gurt nach einem der Ansprüche 1 bis 5, **dadurch gekennzeichnet, daß** die äußeren Enden der beiden Randabschnitte (7) der Schraubenwendeln einstückig in einen in Querrichtung im Stirnkantenbereich zurückgenähten Sicherungsabschnitt (10) übergehen.

7. Gurt nach einem der Ansprüche 4 bis 6, **dadurch gekennzeichnet, daß** das Material der Schraubenwendel (4) und/oder des Gurtes (1) thermoplastisch ist und die Sicherungsabschnitte (8, 9, 10) zumindest im Bereich der Stirnkanten des Gurtes thermofixiert sind.

8. Gurt nach einem der Ansprüche 1 bis 7, **dadurch gekennzeichnet, daß** der Gurt (1) im Bereich der schmalen Randabschnitte (7) ein oder beidseitig mit einem Schutzbelag (11) versehen ist.

9. Gurt nach Anspruch 8, **dadurch gekennzeichnet, daß** der Schutzbelag (11) als Thermoplast auf den Gurt (1) aufgebracht ist.

10. Gurt nach Anspruch 8, **dadurch gekennzeichnet, daß** der Schutzbelag (11) als 2-Komponenten-Polymer auf den Gurt (1) aufgebracht ist.

11. Gurt nach einem der Ansprüche 1 bis 10, **dadurch gekennzeichnet, daß** die Breite der schmalen Randabschnitte (7) zwischen 10 und 30 mm beträgt.

## Claims

1. Textile belt (1), such as a screen belt, conveyor belt or the like, wherein screw helixes (4) are attached to the front edges of the belt ends and can be inserted one inside the other and can be connected by means of an insertable insert wire, pin or the like, **characterised in that** the screw helix (4) is divided at each front edge into at least three portions, namely two narrow edge portions (7) and one middle portion (3), wherein each portion is connected to the belt independently of the other portions.

2. Belt as claimed in claim 1, **characterised in that** the middle portion (3) of the screw helix (4) is woven over its entire width into the textile material or is inserted into end loops of the textile material of the belt (1).

3. Belt as claimed in claim 1, **characterised in that** the middle portion (3) of the screw helix (4) is divided into partial portions, wherein each partial portion is connected to the belt independently of the other portions.

4. Belt as claimed in any one of claims 1 to 3, **characterised in that** the two ends of the middle portion (3) of the screw helix (4) or of its partial portions change in one piece into a securing portion (8) which is spliced back in the longitudinal direction into the textile material of the belt (1) in such a manner as to comply with the weave.

5. Belt as claimed in any one of claims 1 to 4, **characterised in that** the inner ends of the two edge portions (7) of the screw helix change in one piece into a securing portion (9) which is spliced back in the longitudinal direction into the textile material in such a manner as to comply with the weave.

6. Belt as claimed in any one of claims 1 to 5, **characterised in that** the outer ends of the two edge portions (7) of the screw helixes change in one piece into a securing portion (10) which is stitched back in the transverse direction in the front edge region.

7. Belt as claimed in any one of claims 4 to 6, **characterised in that** the material of the screw helix (4) and/or of the belt (1) is thermoplastic and the securing portions (8, 9, 10) are thermoset at least in the region of the front edges of the belt.

8. Belt as claimed in any one of claims 1 to 7, **characterised in that** in the region of the narrow edge portions (7), the belt (1) is provided on one or both sides with a protective overlay (11).

9. Belt as claimed in claim 8, **characterised in that** the protective overlay (11) is applied as a thermoplastic to the belt (1).

10. Belt as claimed in claim 8, **characterised in that** the protective overlay (11) is applied as a 2-component polymer to the belt (1).

11. Belt as claimed in any one of claims 1 to 10, **characterised in that** the width of the narrow edge portions (7) is between 10 and 30 mm.

## Revendications

1. Sangle textile (1), telle qu'une toile perforée, une courroie de convoyeur ou similaire, dans laquelle des ressorts en spirale (4) sont fixés aux bords frontaux des extrémités de sangle, les ressorts pouvant s'emboîter l'un dans l'autre et être accrochés ensemble au moyen d'un fil de fer ou d'un tenon, ou similaire, à embrocher rétractable, **caractérisée en ce que** les ressorts en spirale (4) sur chaque bord frontal sont subdivisés en au moins trois segments, notamment en deux segments de bordure étroits (7) et un segment central (3), chaque segment étant relié à la sangle de façon indépendante des autres segments.

2. Sangle selon la revendication 1, **caractérisée en ce que** le segment central (3) des ressorts en spirale (4) est tissé sur toute sa largeur dans le matériau textile ou inséré dans des boucles d'extrémité du matériau textile de la sangle (1).

3. Sangle selon la revendication 1, **caractérisée en ce que** le segment central (3) des ressorts en spirale (4) est subdivisé en segments partiels, chaque segment partiel étant relié à la sangle de façon indépendante des autres segments.

4. Sangle selon l'une quelconque des revendications 1 à 3, **caractérisée en ce que** les deux extrémités du segment central (3) des ressorts en spirale (4), ou de ses segments partiels, se confondent intégralement avec un segment de maintien (8) épissé en arrière de façon conforme à l'armure dans la direction longitudinale dans le matériau textile de la sangle (1).

5. Sangle selon l'une quelconque des revendications 1 à 4, **caractérisée en ce que** les extrémités intérieures des deux segments de bordure (7) des ressorts en spirale se confondent intégralement avec un segment de maintien (9) épissé en arrière de façon conforme à l'armure dans la direction longitudinale dans le matériau textile.

6. Sangle selon l'une quelconque des revendications 1 à 5, **caractérisée en ce que** les extrémités extérieures des deux segments de bordure (7) des ressorts en spirale se confondent intégralement avec un segment de maintien (10) cousu en arrière dans une direction transversale dans la zone de bord frontal.

7. Sangle selon l'une quelconque des revendications 4 à 6, **caractérisée en ce que** le matériau des ressorts en spirale (4) et/ou de la sangle (1) est thermoplastique et les segments de maintien (8, 9, 10) sont thermofixés au moins au niveau des bords frontaux de la sangle.

8. Sangle selon l'une quelconque des revendications 1 à 7, **caractérisée en ce que** la sangle (1) est munie au niveau des segments de bordure étroits (7) d'un revêtement de protection (11) d'un côté ou des deux côtés.

9. Sangle selon la revendication 8, **caractérisée en ce que** le revêtement de protection (11) est appliqué sur la sangle (1) comme une matière thermoplastique.

10. Sangle selon la revendication 8, **caractérisée en ce que** le revêtement de protection (11) est appliqué sur la sangle (1) comme un polymère biconstituant.

11. Sangle selon l'une quelconque des revendications 1 à 10, **caractérisée en ce que** la largeur des segments de bordure étroits (7) se situe entre 10 et 30 mm.
